# EUROPEAN PATENT APPLICATION

(11) **EP 4 729 830 A1**
(43) Date of publication of application: **22.04.2026**
(21) Application number: 25209491.7
(22) Date of filing: 17.10.2025
(51) Int. Cl.: F21V 8/00, G02B 23/14

(54) **OPTICAL WAVEGUIDE AND OPTICAL WAVEGUIDE SIGHT**

(30) Priority: 17.10.2024 CN 202422514265 U
(71) Applicant: Raytron Technology Co., Ltd., Yantai, Shandong 264006 (CN)
(72) Inventor: YANG, Shuai, Yantai, 264006 (CN); HUANG, Wenbo, Yantai, 264006 (CN); HU, Feng, Yantai, 264006 (CN); LIU, Yufang, Yantai, 264006 (CN); TU, Jinchao, Yantai, 264006 (CN); QI, Dongdong, Yantai, 264006 (CN)
(74) Representative: Studio Torta S.p.A.

(57) **Abstract**

Provided are an optical waveguide and an optical waveguide sight, relating to optics technical field. In the optical waveguide sight, a light source and a collimating element are sequentially arranged along an in-coupling channel of a non-pupil-expansion optical waveguide. The collimating element is configured to collimate light beam emitted from light source, forming first parallel light beam, which is transmitted to the in-coupling region. The non-pupil-expansion optical waveguide is configured to redirect and transmit the first parallel light beam to an out-coupling region thereof to form second parallel light beam that is emitted to human eyes. The non-pupil-expansion optical waveguide enables efficient transmission and expansion of optical path with compact structure, broadening effective observation field of view while maintaining small footprint. Moreover, precise light-guiding characteristics of the optical waveguide prevents refraction deviations of light when it propagates at edges, reducing chromatic aberration and aiming errors, thereby enhancing display effect.

## Description

### FIELD

The present application relates to the technical field of optics, and in particular to an optical waveguide and an optical waveguide sight.

### BACKGROUND

Reflective sight systems are widely used in outdoor settings and other applications. The main types of reflective sights are red dot sights and holographic sights.

The red dot sights create an image by reflecting a point light source to infinity via a reflective mirror, with characteristics of simplicity, ease of use, low cost, and compact size. However, the red dot sights have drawbacks such as a relatively narrow field of view, and chromatic aberration and aiming errors may occur when the human eye moves to the edge of the sight, affecting aiming accuracy. The holographic sights utilize a collimated laser beam incident on a hologram to reproduce a target image at infinity, with advantages of no requirement for eye relief, high stability, and minimal chromatic aberration. However, the holographic sights have disadvantages such as high manufacturing costs, complex structures, and large size. It is evident that both the red dot sights and the holographic sights have certain flaws that affect their usability.

Therefore, providing a compact sight with good display performance is a technical issue that needs to be addressed by those skilled in the field.

### SUMMARY

An object of the present application is to provide an optical waveguide and an optical waveguide sight to address the technical issues of large size and poor display performance present in existing reflective sights.

To address the aforementioned technical issues, an optical waveguide sight is provided according to the present application, including a light source, a collimating element, and a non-pupil-expansion optical waveguide. The light source and the collimating element are arranged in sequence along an in-coupling channel of the non-pupil-expansion optical waveguide. The collimating element is configured to collimate a light beam emitted from the light source to form a first parallel light beam that is then transmitted to an in-coupling region of the non-pupil-expansion optical waveguide. The non-pupil-expansion optical waveguide is configured to redirect and transmit the first parallel light beam to an out-coupling region of the non-pupil-expansion optical waveguide to form a second parallel light beam that is then emitted to a human eye.

In an embodiment, both the in-coupling region and the out-coupling region of the non-pupil-expansion optical waveguide have a size greater than a preset size. Moreover, the size of the in-coupling region and the size of the out-coupling region are the same, or a difference between the size of the in-coupling region and the size of the out-coupling region is smaller than a preset threshold, so that an area of a coupled-in image entering the non-pupil-expansion optical waveguide is identical to that of a coupled-out image exiting the non-pupil-expansion optical waveguide.

In an embodiment, the optical waveguide sight further includes a housing. The light source, the collimating element, and the non-pupil-expansion optical waveguide are all arranged inside the housing

In an embodiment, the optical waveguide sight further includes a light source adjustment mechanism arranged inside the housing, and the light source is disposed in the light source adjustment mechanism.

The light source adjustment mechanism includes a first adjustment mechanism and/or a second adjustment mechanism. The first adjustment mechanism and the second adjustment mechanism are configured to adjust positions of the light source in different directions, respectively.

In an embodiment, the first adjustment mechanism includes a first adjustment knob and a first transmission component. The first adjustment knob includes a first operating part located outside the housing, and a first extending part that extends into the housing. The first extending part is connected to the first transmission component, which is connected to the light source. The first adjustment knob is rotatable to move the light source in a left-right direction via the first transmission component. Additionally and/or alternatively, the second adjustment mechanism includes a second adjustment knob and a second transmission component. The second adjustment knob includes a second operating part located outside the housing, and a second extending part that extends into the housing. The second extending part is connected to the second transmission component, which is connected to the light source. The second adjustment knob is rotatable to move the light source in a vertical direction via the second transmission component.

In an embodiment, the second adjustment mechanism further includes a third transmission component, which is interlinked with the second extending part and is in wedge-shaped abutment with the second transmission component to convert a left-right movement of the second extending part into a vertical movement of the second transmission component.

In an embodiment, the optical waveguide sight further includes a vibration sensor, which is in signal connection with a main control module.

In an embodiment, the optical waveguide sight further includes a battery compartment, which is arranged inside the housing and is located at one side of the non-pupil-expansion optical waveguide.

In an embodiment, the optical waveguide sight further includes a photosensitive component, which is arranged inside the housing, and a light-transmitting component that aligns with a light-receiving part of the photosensitive component is arranged on the housing.

In an embodiment, the optical waveguide sight further includes a first transparent component, which is located at a side of the non-pupil-expansion optical waveguide away from the human eye and is embedded in the housing.

Additionally and/or alternatively, the optical waveguide sight further includes a second transparent component, which is located at a side of the non-pupil-expansion optical waveguide close to the human eye and is embedded in the housing.

In an embodiment, the non-pupil-expansion optical waveguide is arranged obliquely relative to the first parallel light beam, and both ends of the non-pupil-expansion optical waveguide are fixed to an inner surface of the housing. Alternatively, the non-pupil-expansion optical waveguide is arranged perpendicular to the first parallel light beam, and both ends of the non-pupil-expansion optical waveguide are fixed to the inner surface of the housing.

In an embodiment, the out-coupling region is arranged on an optical path of a white light, and a propagation direction of the second parallel light beam is consistent with that of the white light after entering the optical waveguide sight, so that the white light is diffracted from the out-coupling region and is emitted along with the second parallel light beam formed based on the light source to the human eye.

In an embodiment, the light source is a single-light source. Alternatively, the light source includes a first light source and a second light source, with a light-combining element being arranged on the optical path between the light source and the collimating element, so that the light beams emitted from the first light source and the second light source are combined by the light-combining element and then transmitted to the collimating element. The first light source and the second light source may be of the same type or different types, with the type of the light source include at least a point light source type, an image source type, and a laser light source type.

In an embodiment, a hologram is arranged on a light-output side of the out-coupling region and is located on a transmission path of the second parallel light beam.

Additionally and/or alternatively, in a case that the light source includes a laser light source, the laser light source has a wavelength identical to that of a reference light used in preparing the hologram.

Additionally and/or alternatively, the out-coupling region and the hologram are also arranged in the optical path of the white light, and a propagation direction of the second parallel light beam is consistent with that of the white light after entering the optical waveguide sight, so that the white light is diffracted from the out-coupling region, transmitted together with the second parallel light beam formed based on the light source to the hologram, and finally emitted to the human eye.
To address the above technical issues, an optical waveguide is provided according to the present application, including a waveguide sheet. The waveguide sheet has an in-coupling region and an out-coupling region provided at both ends thereof, respectively. Both the in-coupling region and the out-coupling region have a size greater than a preset size. The size of the in-coupling region and the size of the out-coupling region are the same, or a difference between the size of the in-coupling region and the size of the out-coupling region is smaller than a preset threshold;

The in-coupling region is configured to receive a first parallel light beam and redirect it for total internal reflection within the waveguide sheet. The out-coupling region is configured to receive the light beam after total internal reflection and redirect it to form a second parallel light beam for emission.

An area of a coupled-in image entering the waveguide sheet is identical to that of a coupled-out image exiting the waveguide sheet.

In an embodiment, the sizes of both the in-coupling region and the out-coupling region being greater than the preset size specifically means that a sum of the areas of the in-coupling region and the out-coupling region is greater than 70% of the area of the waveguide sheet.

In an embodiment, a hologram is arranged on a light-output side of the out-coupling region and is located on a transmission path of the second parallel light beam.

In an embodiment, the hologram is affixed to the waveguide sheet by stamping, etching, masking or exposure and development.

The optical waveguide sight provided according to the present application includes a housing, in which a light source, a collimating element and a non-pupil-expansion optical waveguide are arranged. The light source and the collimating element are arranged in sequence along an in-coupling channel of the non-pupil-expansion optical waveguide. The collimating element is configured to collimate a light beam emitted from the light source to form a first parallel light beam that is then transmitted to the in-coupling region of the non-pupil-expansion optical waveguide. The non-pupil-expansion optical waveguide is configured to redirect and transmit the first parallel light beam to an out-coupling region of the non-pupil-expansion optical waveguide to form a second parallel light beam that is then emitted to a human eye. The non-pupil-expansion optical waveguide may achieve efficient transmission and expansion of the optical path with a compact structure, broadening the effective observation field of view while maintaining a small footprint. Additionally, the precise light-guiding characteristics of the optical waveguide may avoid refraction deviations of light when it propagates at edges, fundamentally reducing chromatic aberration and aiming errors. Furthermore, compared with the holographic sights, in the optical waveguide sight provided according to the present application, the non-pupil-expansion optical waveguide does not necessarily rely on the complex fabrication process of holograms or large-scale collimating laser assemblies. By virtue of its inherent capability to directionally confine and transmit optical signals, the non-pupil-expansion optical waveguide not only achieves stable presentation of target images at infinity, offering the advantages of no eye relief requirement and minimal chromatic aberration, but also significantly simplifies the overall structure, reduces the footprint of the device, and lowers the processing and manufacturing costs of core optical components.

The optical waveguide provided according to the present application is a non-pupil-expansion optical waveguide, with an in-coupling region and an out-coupling region located at both ends of the waveguide sheet, respectively. The in-coupling region is configured to receive a first parallel light beam and redirect it for total internal reflection within the waveguide sheet. The out-coupling region is configured to receive the light beam after total internal reflection and redirect it to form a second parallel light beam for emission. By utilizing the waveguide sheet to alter the propagation path of light, the optical waveguide sight achieves optical path effects of the reflective sight while avoiding the issues of large size and weight, or poor target display performance commonly associated with reflective sights. It has the advantages such as small footprint, light weight and excellent display effect. Furthermore, the area of the coupled-in image entering the waveguide sheet is identical to that of the coupled-out image exiting the waveguide sheet, eliminating the need for the coupled-in image to be copied within the optical waveguide. This area consistency between the coupled-in image and the coupled-out image reduces the optical efficiency loss caused by image copying. Furthermore, the size of the in-coupling region and the size of the out-coupling region are the same and both exceed the preset size, so that the waveguide sheet may achieve a large exit pupil effect, yield a high-quality coupled-out image, minimize optical efficiency losses and provide good observation experience. Additionally, since the light beam undergoes total internal reflection within the waveguide sheet instead of transmission, the light loss is further reduced, increasing the amount of light entering the human eye and significantly enhancing the user experience.

### BRIEF DESCRIPTION OF THE DRAWINGS

To illustrate the embodiments of the present application more clearly, the accompanying drawings used in the embodiments of the present application are briefly described hereinafter. Apparently, the accompanying drawings in the following descriptions show only some embodiments of the present application, and other accompanying drawings may be obtained by those ordinary skilled in the art based on these accompanying drawings without creative efforts.
FIG. 1 is a schematic view of an optical waveguide provided according to an embodiment of the present application;
FIG. 2 is a schematic view of an optical waveguide provided according to an embodiment of the present application from another perspective;
FIG. 3 is a cross-sectional view of an optical waveguide sight provided according to an embodiment of the present application;
FIG. 4 is a schematic view of a light source adjustment mechanism provided according to an embodiment of the present application;
FIG. 5 is a first side view of the optical waveguide sight shown in FIG. 3;
FIG. 6 is a second side view of the optical waveguide sight shown in FIG. 3;
FIG. 7 is a schematic view showing various display patterns of the light source provided according to an embodiment of the present application;
FIG. 8 is an optical schematic view of the optical waveguide sight shown in FIG. 3;
FIG. 9 is an optical schematic view of a sight provided according to a first embodiment of the present application;
FIG. 10 is an optical schematic view of a sight provided according to a second embodiment of the present application; and
FIG. 11 is an optical schematic view of a sight provided according to a third embodiment of the present application.

Reference numerals are listed as follows:
1 first light source; 2 second light source; 3 light-combining element; 4 collimating element; 5 non-pupil-expansion optical waveguide; 50 waveguide sheet; 6 human eye; 7 hologram; 8 housing; 9 light source; 10 battery compartment; 11 flat-faced slider; 12 light source adjustment mechanism; 1201 first adjustment mechanism; 1202 second adjustment mechanism; 1203 first operating part; 1204 first extending part; 1205 second operating part; 1206 second extending part; 12.1 first adjustment knob; 12.2 first transmission component; 12.3 second adjustment knob; 12.4 second transmission component; 12.5 third transmission component; 12.6 through-hole; 12.7 guide component; 12.8 fourth transmission component; 12.9 spring element; 13 button module; 14 battery; 15 battery cover; 16 photosensitive component; 17 light-transmitting component; 18 first transparent component; 19 second transparent component; 20 quick-release bracket; 21 quick-release locking block.

### DETAILED DESCRIPTION OF THE EMBODIMENTS

The technical solutions in the embodiments of the present application will be described clearly and completely below in conjunction with the accompanying drawings in the embodiments of the present application. It is apparent that the described embodiments are only some rather than all of the embodiments according to the present application. Based on the embodiments in the present application, any other embodiments obtained by those skilled in the art without any creative effort fall within the protection scope of the present application.

A core of the present application is to provide an optical waveguide and an optical waveguide sight, to address the technical issues of large size and poor display performance present in existing reflective sights.

In order to enable those skilled in the art to better understand the solutions of the present application, the present application is further described in detail below in conjunction with the accompanying drawings and the embodiments.

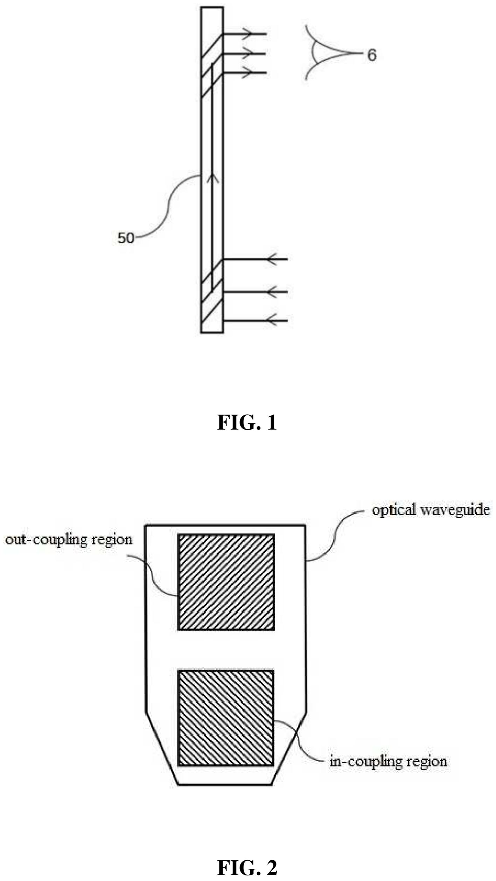

To enable those skilled in the art to better understand the present application, the present application will be further explained in detail below with reference to the accompanying drawings and specific embodiments. FIG. 1 is a schematic view of an optical waveguide provided according to an embodiment of the present application. As shown in FIG. 1, the optical waveguide includes a waveguide sheet 50. The optical waveguide may be a holographic optical waveguide, that is, the one fabricated through a holographic process. The waveguide sheet 50 may be a holographic waveguide sheet. The waveguide sheet 50 has an in-coupling region and an out-coupling region provided at both ends thereof, respectively. The in-coupling region and the out-coupling region both have a size greater than a preset size. Moreover, the size of the in-coupling region and the size of the out-coupling region are the same, or a difference between the size of the in-coupling region and the size of the out-coupling region is smaller than a preset threshold.

The in-coupling region is configured to receive a first parallel light beam and redirect it for total internal reflection within the waveguide sheet 50. The out-coupling region is configured to receive the light beam after the total internal reflection and redirect it to form a second parallel light beam for emission.

An area of a coupled-in image entering the waveguide sheet 50 is identical to that of a coupled-out image exiting the waveguide sheet 50.

To ensure the amount of light received by a human eye 6 after passing through the waveguide sheet 50, in the optical waveguide provided according to the present application, the area of the coupled-in image entering the waveguide sheet 50 is identical to that of the coupled-out image exiting the waveguide sheet 50, meaning that the optical waveguide possesses a non-pupil-expansion function, hence the optical waveguide provided in this embodiment is also referred to as a non-pupil-expansion optical waveguide. FIG. 2 is a schematic view of an optical waveguide provided according to an embodiment of the present application from another perspective. As shown in FIG. 2, an in-coupling region and an out-coupling region are disposed within the waveguide sheet 50. A holographic grating within each of the in-coupling region and the out-coupling region offer advantages such as small volume, thin profile, and high diffraction efficiency. According to the diffraction grating equation mλ = d(sinα ± sinβ), the diffraction angle β represents the propagation direction of the light after it passes through the grating, and the diffraction wavelength λ is a fixed value. By adjusting the grating order m, the incident angle α, and the grating constant d, it is possible to modulate the light beam, directing the light beam to propagate in a specified direction after passing through the grating. There are no specific restrictions on the size of the in-coupling region and the size of the out-coupling region. The in-coupling region and the out-coupling region may be identical in size, or the difference between their sizes may be smaller than a preset threshold. It is noteworthy that the preset threshold is a value close to zero. Preferably, the size of the in-coupling region is equal to that of the out-coupling region. The area of the coupled-in image entering the waveguide sheet 50 is identical to that of the coupled-out image exiting the waveguide sheet 50, meaning that the areas of the coupled-in image and the coupled-out image are equal or substantially equal. Meanwhile, the in-coupling region and the out-coupling region are identical in size. This ensures high quality of images coupled in and out through the waveguide sheet 50, with minimal optical efficiency loss. Furthermore, the size of the in-coupling region and the size of the out-coupling region are both greater than a preset size, that is, the sum of the areas of the in-coupling region and the out-coupling region exceeds 70% of the area of the waveguide sheet 50. This configuration enables the optical waveguide to have a large exit pupil effect. It is evident that the optical waveguide provided in this embodiment is a non-pupil-expansion optical waveguide. The coupled-in image does not need to be copied within the optical waveguide, meaning that the area of the coupled-in image is identical to that of the coupled-out image, which reduces optical efficiency loss caused by image copying. Furthermore, the size of the in-coupling region and the size of the out-coupling region are the same and both are larger than the preset size, enabling this non-pupil-expansion optical waveguide to achieve a large exit pupil effect, high-quality coupled-out images, minimal optical efficiency loss, and an excellent viewing experience.

The in-coupling region is configured to receive a first parallel light beam and redirect it for total internal reflection within the waveguide sheet 50, and the out-coupling region is configured to receive the light beam after total internal reflection and redirect it to form a second parallel light beam for emission.

In practice, a holographic photograph 7 is arranged on a light-output side of the out-coupling region of the optical waveguide and is located on a transmission path of the second parallel light beam. The holographic photograph 7 may be positioned at a distance from the waveguide sheet 50, and it may be affixed to the waveguide sheet 50 by stamping, etching, masking or exposure and development. To reduce system footprint, the holographic photograph 7 may be affixed to the waveguide sheet 50 by stamping, etching, masking or exposure and development.

The optical waveguide provided according to the present application is a non-pupil-expansion optical waveguide 5. The waveguide sheet 50 features an in-coupling region and an out-coupling region provided at both ends thereof, respectively. The in-coupling region is configured to receive a first parallel light beam and redirect it for total internal reflection within the waveguide sheet 50. The out-coupling region is configured to receive the light beam after total internal reflection and redirect it to form a second parallel light beam for emission. By utilizing the waveguide sheet 50 to alter the propagation path of light, the optical waveguide achieves optical path effects of the reflective sight while avoiding the issues of large size and weight, or poor target display performance commonly associated with the reflective sight. It has the advantages such as small footprint, light weight and excellent display effect. Furthermore, the area of the coupled-in image entering the waveguide sheet 50 is identical to that of the coupled-out image exiting the waveguide sheet 50, and the size of the in-coupling region and the size of the out-coupling region are both larger than the preset size. Furthermore, the size of the in-coupling region and the size of the out-coupling region are the same, or a difference between the size of the in-coupling region and the size of the out-coupling region is smaller than the preset threshold. This achieves a non-pupil-expansion and large exit pupil effect, reducing light loss and increasing the amount of light entering the human eye. Additionally, since the light beam undergoes total internal reflection within the waveguide sheet 50 instead of transmission, the light loss is further reduced, increasing the amount of light entering the human eye 6 and significantly enhancing the user experience.

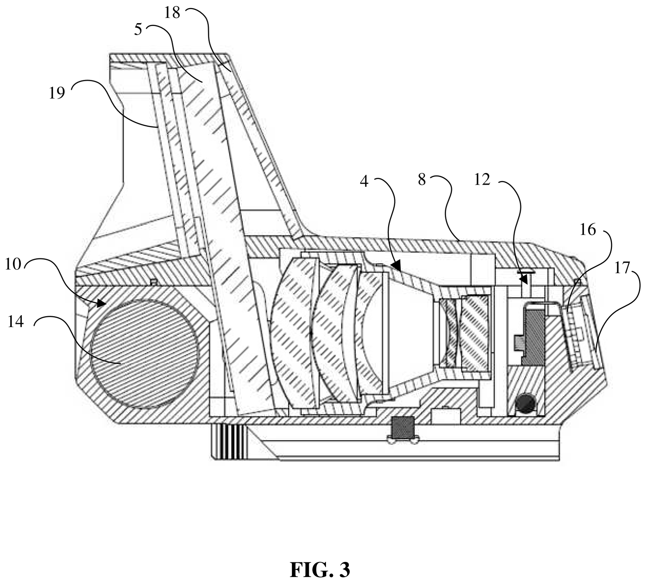

The optical waveguide is described above. An optical waveguide sight is further provided in this embodiment, including the aforementioned optical waveguide. FIG. 3 is a cross-sectional view of an optical waveguide sight provided according to an embodiment of the present application. As shown in FIG. 3, the optical waveguide sight includes a housing 8, within which a light source 9, a collimating element 4, and a non-pupil-expansion optical waveguide 5 are arranged. The light source 9 and the collimating element 4 are sequentially arranged along an in-coupling channel of the non-pupil-expansion optical waveguide 5. The collimating element 4 is configured to collimate a light beam emitted from the light source 9 to form a first parallel light beam that is then transmitted to an in-coupling region of the non-pupil-expansion optical waveguide 5, and the non-pupil-expansion optical waveguide 5 is configured to redirect and transmit the first parallel light beam to an out-coupling region of the non-pupil-expansion optical waveguide 5 to form a second parallel light beam that is then emitted to the human eye 6. In FIG. 3, the human eye 6 may be located on either a left or right side of the optical waveguide sight for observation.

The size of the in-coupling region and the size of the out-coupling region are both larger than the preset size. Furthermore, the size of the in-coupling region and the size of the out-coupling region are the same, or the difference between the size of the in-coupling region and the size of the out-coupling region is smaller than the preset threshold. The area of the coupled-in image entering the non-pupil-expansion optical waveguide 5 is identical to that of the coupled-out image exiting the non-pupil-expansion optical waveguide 5.

It should be noted that the non-pupil-expansion optical waveguide 5 provided in this embodiment is the optical waveguide described above. For structural details of the non-pupil-expansion optical waveguide 5, reference may be made to the description of the optical waveguide above, and the details will not be repeated herein.

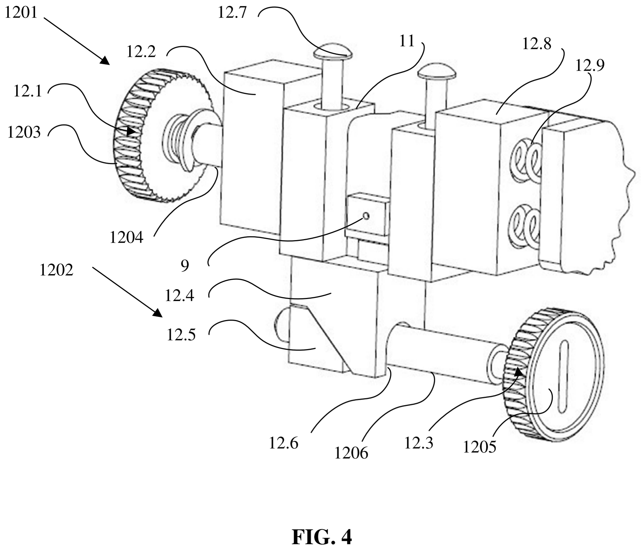

To precisely adjust the relative position between the light source 9 and the non-pupil-expansion optical waveguide 5, ensuring that the light beam emitted by the light source 9 may be efficiently and stably coupled into the in-coupling region of the non-pupil-expansion optical waveguide 5, and avoiding issues such as uneven brightness on a reticle, blurred imaging, or unclear aiming lines caused by the displacement of the light source 9, in practice, the optical waveguide sight further includes a light source adjustment mechanism 12, with the light source 9 being disposed on the light source adjustment mechanism 12. FIG. 4 is a schematic view of a light source adjustment mechanism provided according to an embodiment of the present application. Compared with the configuration in which the light source adjustment mechanism 12 is in direct contact with the light source 9 to adjust the position of the light source 9, as shown in FIG. 4, the light source 9 is fixed onto a vertically adjustable flat-faced slider 11 in the present application. The light source 9 is positioned within the light source adjustment mechanism 12 via the vertically adjustable flat-faced slider 11, thereby preventing direct contact between the light source 9 and the light source adjustment mechanism 12, which avoids potential damage to the light source 9 caused by the light source adjustment mechanism 12.

In order to flexibly adjust the position of the light source 9, the light source adjustment mechanism 12 includes a first adjustment mechanism 1201 and/or a second adjustment mechanism 1202. The first adjustment mechanism 1201 and the second adjustment mechanism 1202 are configured to adjust the position of the light source 9 in different directions, respectively. In some embodiments, the first adjustment mechanism 1201 includes a first adjustment knob 12.1 and a first transmission component 12.2. The first adjustment knob 12.1 includes a first operating part 1203 located outside the housing 8 and a first extending part 1204 extending into the housing 8. The first extending part 1204 is connected to the first transmission component 12.2, which is connected to the light source 9. When the first adjustment knob 12.1 is rotated, it drives the light source 9 to move in a left-right direction via the first transmission component 12.2.

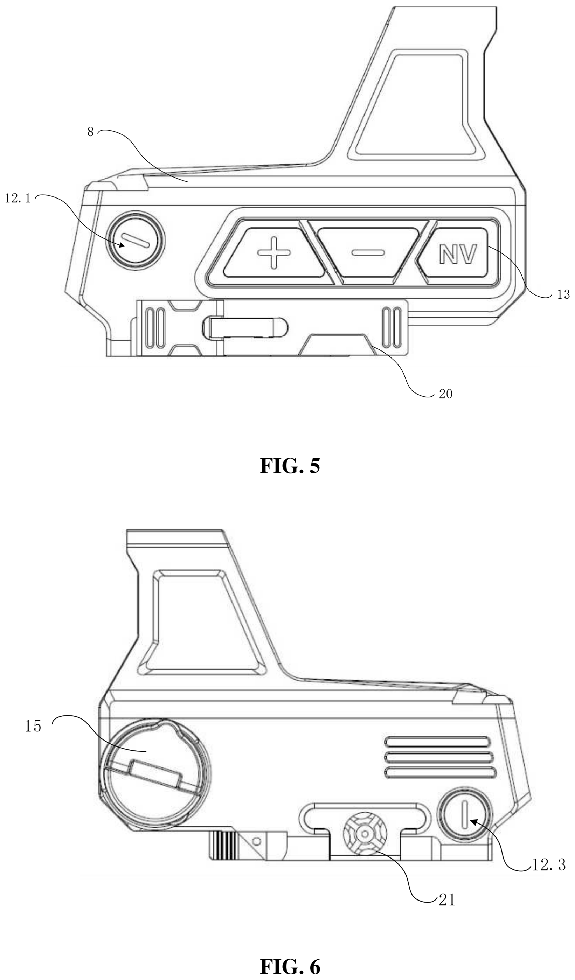

FIG. 5 is a first side view of the optical waveguide sight shown in FIG. 3, illustrating the position of the first adjustment knob 12.1 within the entire device. Referring again to FIG. 4, the first transmission component 12.2 is a flat-faced block for adjusting the position. The first adjustment knob 12.1 of the light source adjustment mechanism 12 is rotated to drive the first transmission component 12.2 to move leftward or rightward, which in turn drives the vertically adjustable flat-faced slider 11 to move leftward or rightward, thereby altering the left-right position of the light source 9 fixed on the vertically adjustable flat-faced slider 11. Taking the rightward movement of the light source 9 as an example, when the first adjustment knob 12.1 is rotated clockwise, it pushes the first transmission component 12.2 to move rightward, which in turn causes the vertically adjustable flat-faced slider 11 to move rightward, thereby achieving the rightward movement of the light source 9. Conversely, when the first adjustment knob 12.1 is rotated counterclockwise, it pulls the first transmission component 12.2 to move leftward, which in turn drives the vertically adjustable flat-faced slider 11 to move leftward, thereby achieving the leftward movement of the light source 9.

To enhance the flexibility of the position adjustment of the light source 9, the first adjustment mechanism 1201 further includes a fourth transmission component 12.8 (see FIG. 4) and a spring element 12.9. The fourth transmission component 12.8 and the first transmission component 12.2 are positioned on opposite sides of the light source 9, respectively. An end of the fourth transmission component 12.8 away from the light source 9 is connected to one end of the spring element 12.9, and the other end of the spring element 12.9 is connected to an inner surface of the housing 8. When the first adjustment knob 12.1 is rotated clockwise, it pushes the first transmission component 12.2 to move rightward, which in turn drives the vertically adjustable flat-faced slider 11 and the fourth transmission component 12.8 to move rightward, thereby achieving the rightward movement of the light source 9. At this time, the spring element 12.9 stores energy. Conversely, when the first adjustment knob 12.1 is rotated counterclockwise, it pulls the first transmission component 12.2 to move leftward. The spring element 12.9 is released to push the fourth transmission component 12.8 and the vertically adjustable flat-faced slider 11 to move leftward, thereby achieving the leftward movement of the light source 9. During the left-right movement of the light source 9, the flat-faced slider 11 remains clamped. The spring element 12.9 enhances the flexibility of the position adjustment of the light source 9 while ensuring the stability of the light source 9 during movement.

The first adjustment mechanism 1201 described above enables the left-right movement of the light source 9. The second adjustment mechanism 1202 will be described below. As shown in FIG. 4, the second adjustment mechanism 1202 includes a second adjustment knob 12.3 and a second transmission component 12.4. The second adjustment knob 12.3 includes a second operating part 1205 located outside the housing 8 and a second extending part 1206 extending into the housing 8. The second extending part 1206 is connected to the second transmission component 12.4, which is connected to the light source 9. When the second adjustment knob 12.3 is rotated, it drives the light source 9 to move in a vertical direction via the second transmission component 12.4. The second adjustment mechanism 1202 further includes a third transmission component 12.5. The third transmission component 12.5 is interlinked to the second extending part 1206 and is in wedge-shaped abutment with the second transmission component 12.4, converting the left-right movement of the second extending part 1206 into the vertical movement of the second transmission component 12.4. In FIG. 4, each of the second transmission component 12.4 and the third transmission component 12.5 is provided with a through-hole 12.6, with the through-holes being coaxial with each other. The second extending part 1206 extends through the second transmission component 12.4 to the third transmission component 12.5, and is threadedly connected to the third transmission component 12.5. Additionally, the through hole 12.6 in the second transmission component 12.4 has a diameter larger than that of the through hole 12.6 in the third transmission component 12.5. FIG. 6 is a second side view of the optical waveguide sight shown in FIG. 3, illustrating the position of the second adjustment knob 12.3 in the device. Referring again to FIG. 4, each of the second transmission component 12.4 and the third transmission component 12.5 is a wedge-shaped block. The second adjustment knob 12.3 of the light source adjustment mechanism 12 is rotated to drive the third transmission component 12.5 to move leftward or rightward, which in turn drives the second transmission component 12.4 to move upward or downward, enabling the vertically adjustable flat-faced slider 11 to move upward or downward, and thus changing the position of the light source 9 that is fixed to the vertically adjustable flat-faced slider 11 in the vertical direction.

To ensure the smooth movement of the light source 9 during its displacement, the light source adjustment mechanism 12 further includes a guide component 12.7, which is configured to guide the movement of the light source 9 in the direction defined by a guide axis of the guide component 12.7. The guide component 12.7 may be in direct or indirect contact with the light source 9. To prevent damage to the light source 9 that might occur when the guide component 12.7 is in direct contact with and drives the light source 9 to move in the direction defined by the guide axis of the guide component 12.7, the guide component 12.7 is in indirect contact with the light source 9 in practice. Referring again to FIG. 4, the guide component 12.7 is positioned in the vertically adjustable flat-faced slider 11. The guide component 12.7 enables the light source 9 to move vertically along the guide component 12.7, so that the light source 9 is prevented from shaking in other directions during the vertical movement, thereby enhancing the precision of controlling the position of the light source 9.

To facilitate user operation and meet user requirements, in some embodiments, the optical waveguide sight further includes a button module 13 and a vibration sensor. The button module 13 is embedded in the housing 8 and partially positioned inside the housing 8. The button module 13 includes buttons exposed outside the housing 8 and a button board housed inside the housing 8. The vibration sensor is positioned inside the housing 8, and it may be located on the button board or another circuit board. The vibration sensor is in signal connection with a main control module and is configured to monitor the operational state of the device, namely whether the device is in operation or not. The vibration sensor is configured to receive a vibration signal from the device and transmit it to the main control module. The main control module determines whether the device is in operation or not based on the vibration signal. Specifically, when the vibration signal transmitted by the vibration sensor has vibration amplitude exceeding a preset amplitude threshold, the main control module determines that the device is in operation, and it subsequently controls a reticle light source of the device to automatically turn on, enabling a user to pick up and operate the device immediately without delay. Conversely, when the vibration amplitude of the vibration signal transmitted by the vibration sensor is below the preset amplitude threshold, the main control module determines that the device is in a stationary state, and it subsequently controls the reticle light source of the device to turn off, thereby conserving energy. This intelligent recognition significantly enhances convenience and promptness for the user when operating the device. After remaining stationary for a certain duration (e.g., 10 minutes), the device automatically enters a sleep mode. Upon detecting vibration, a red dot automatically wakes up. If the device remains stationary in the sleep mode for certain duration (e.g., 8 hours), the device will automatically power off. The reticle pattern, brightness, and reticle mode of the device remain unchanged before and after it is in the sleep mode or automatic shutdown. Additionally, a battery alert function may be incorporated into the optical waveguide sight. For instance, when the battery level of the device drops below 1%, the light source 9 will flash at regular intervals (e.g., per minute) to provide a low-battery warning.

A power supply board is fixed to the inner surface of the housing 8, and the button module 13 is electrically connected to the power supply board, which is configured to supply power to the light source 9.

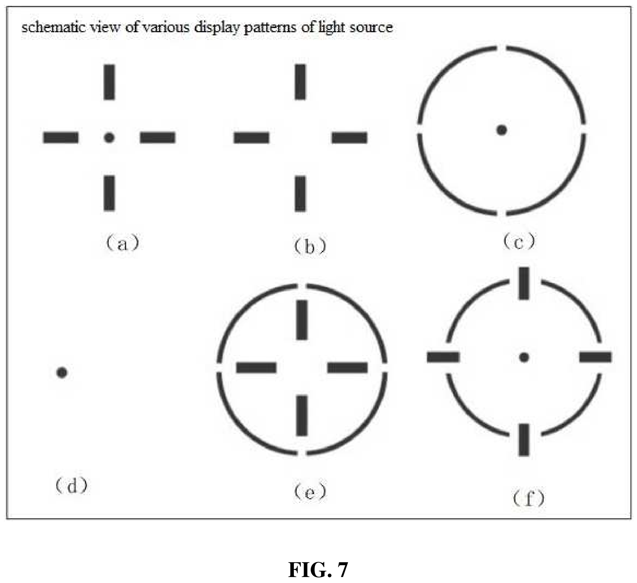

The position of the button module 13 is shown in FIG. 5. The number and type of buttons on the button module 13 are not limited and may be determined based on actual requirements. In FIG. 5, the button module 13 includes "+", "-" and "NV" buttons, which are configured to turn on or turn off the device, control the brightness of the light source 9, switch the patterns of the light source 9, and toggling between night mode and daytime mode of the light source 9. FIG. 7 is a schematic view showing various display patterns of the light source provided according to an embodiment of the present application. In (a) of FIG. 7, the pattern of the light source 9 is composed of crosshairs and a central dot; in (b) of FIG. 7, the pattern of the light source 9 is composed of solely crosshairs; in (c) of FIG. 7, the pattern of the light source 9 features a circle with a central dot; in (d) of FIG. 7, the pattern of the light source 9 features a dot; in (e) of FIG. 7, the pattern of the light source 9 consists of a circle and crosshairs distributed within the circle, with the circle being composed of discontinuous arc segments; and in (f) of FIG. 7, the pattern of the light source 9 features a circle with a central dot, where the circle is composed of discontinuous arc segment with short lines extending at the top, bottom, left, and right sides of the circle, respectively. The multiple display patterns of the light source 9 may be switched by long-pressing the "+" button of the button module 13. For instance, the brightness of the light source 9 is divided into ten levels, and it may be adjusted by short-pressing the "-" button of the button module 13. The light source 9 features a night mode and a daytime mode, which may be switched via the "NV" button on the button module 13. In night mode, the brightness of the light source 9 is significantly low, so it may be used in combination with a low-light night-vision device, preventing high brightness of the light source 9 from exposing the position of the user during operation at night.

To meet the power requirements of the optical waveguide sight, in the embodiment, the optical waveguide sight further includes a battery compartment 10, which is housed within the housing 8 and positioned at a side of the non-pupil-expansion optical waveguide 5. One end of a battery 14 located within the battery compartment 10 is connected to the power supply board. The battery compartment 10 may be located on either side of the non-pupil-expansion optical waveguide 5, preferably positioned on the side opposite to the in-coupling channel of the non-pupil-expansion optical waveguide 5, so that the optical elements of the in-coupling channel and the battery compartment 10 are located on opposite sides of the non-pupil-expansion optical waveguide 5, respectively. Moreover, it is preferable that an axial direction of the battery compartment 10 is perpendicular to the optical path propagation direction of the in-coupling channel, resulting in a smaller overall footprint and a higher level of integration for the sight.

As illustrated in FIG. 3, the housing 8 includes a lower first housing and an upper second housing. The light source 9 and the collimating element 4 are positioned inside the first housing, whereas the in-coupling region of the non-pupil-expansion optical waveguide 5 is situated inside the first housing and the out-coupling region of the non-pupil-expansion optical waveguide 5 is positioned inside the second housing. The battery compartment 10 is housed inside the first housing, with a battery cover 15 being positioned on a side of the first housing. The button module 13 is located on an outer surface of the first housing, and the light source adjustment mechanism 12 is situated partially on the outer side of the first housing and partially inside the first housing. The battery cover 15 is configured to fix the battery 14 and typically features conductive contacts (or metal spring tabs) that, when the battery cover is closed and the battery is fixed in place, come into contact with a battery electrode and internal circuit contacts, thereby achieving circuit communication. The battery 14 is configured to supply power to the entire optical waveguide sight.

To enhance the visual experience of the user, in an embodiment, as illustrated in FIG. 3, the optical waveguide sight further includes a photosensitive component 16, which is housed inside the housing 8. Furthermore, a light-transmitting component 17 that aligns with a light-receiving part of the photosensitive component 16 is arranged on the housing 8. Ambient light passes through the light-transmitting component 17 and is received by the photosensitive component 16, which first detects changes in the ambient light via its own photosensitive element. When the photosensitive component 16 detects that the external environment becomes brighter, the power supply board increases the power output based on the signal transmitted by the photosensitive component 16, thereby enhancing the brightness of the light source 9 to ensure clear visibility of the reticle. Conversely, when the photosensitive component 16 detects that the external environment becomes darker, the power supply board reduces the power output based on the signal transmitted by the photosensitive component 16, reducing the brightness of the light source 9 to prevent the reticle from becoming excessively bright and glaring. Ultimately, this achieves the effect of automatically adjusting the reticle brightness to match the ambient light conditions.

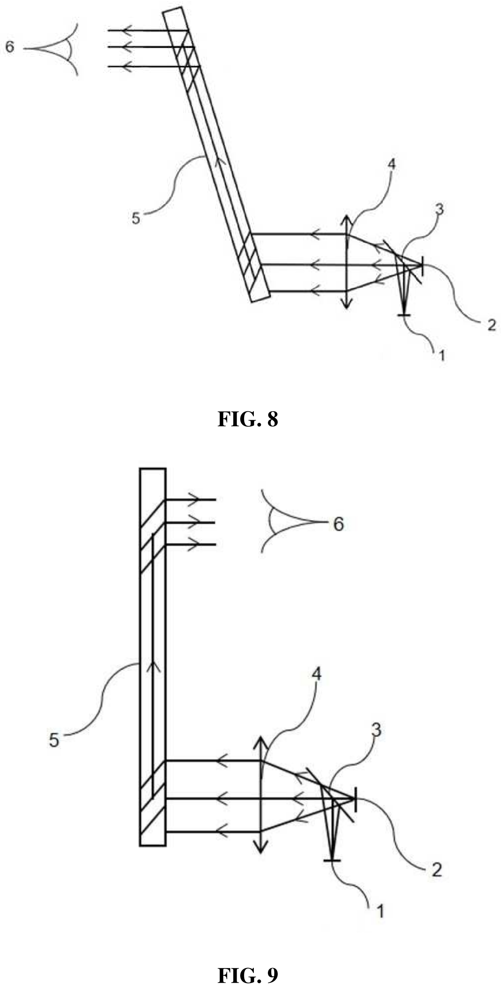

FIG. 8 is an optical schematic view of the optical waveguide sight shown in FIG. 3. A first light source 1, a second light source 2, a light-combining element 3, and the collimating element 4 are all situated within the in-coupling channel of the non-pupil-expansion optical waveguide 5, whereas the human eye 6 is positioned within the out-coupling channel of the non-pupil-expansion optical waveguide 5. To protect the elements within the optical waveguide sight, in an embodiment, as shown in FIG. 4, the optical waveguide sight further includes a first transparent component 18 and/or a second transparent component 19. The first transparent component 18 is located at a side of the non-pupil-expansion optical waveguide 5 away from the human eye 6 and is embedded in the housing 8. The second transparent component 19 is positioned at a side of the non-pupil-expansion optical waveguide 5 close to the human eye 6. For example, both the first transparent component 18 and the second transparent component 19 may be made of glass, specifically with the first transparent component 18 serving as a front protective glass and the second transparent component 19 serving as a rear protective glass. The first transparent component 18 is situated on the object side and is configured to protect the non-pupil-expansion optical waveguide 5 and reduce scattered light reflected to the object side from the non-pupil-expansion optical waveguide 5. The second transparent component 19 is positioned close to the human eye and is configured to transmit the image output by the non-pupil-expansion optical waveguide 5 and protect the non-pupil-expansion optical waveguide 5. The first transparent component 18 may be inclined or parallel relative to the non-pupil-expansion optical waveguide 5. Preferably, the first transparent component 18 is inclined relative to the non-pupil-expansion optical waveguide 5, and is coated with an anti-reflective (AR) film. The second transparent component 19 may be inclined or parallel relative to the non-pupil-expansion optical waveguide 5. Preferably, the second transparent component 19 is parallel to the non-pupil-expansion optical waveguide 5, and is coated with an AR film. This arrangement not only enhances the light transmittance of the device, but also ensures a streamlined and aesthetically pleasing appearance. Additionally, a protective window is positioned on the side of the second transparent component 19 close to the human eye to shield against rainwater, enabling the user to observe without interference even on rainy days.

The housing 8 serves as the supporting structure for the entire optical waveguide sight, and cooperates with the light-transmitting component 17, the first transparent component 18, and the second transparent component 19 to achieve sealing of the whole device and facilitate the mounting of all components.

In the embodiment, the non-pupil-expansion optical waveguide 5 is positioned perpendicular to the first parallel light beam, and both ends of the non-pupil-expansion optical waveguide 5 are fixed to the inner surface of the housing 8. Alternatively, the non-pupil-expansion optical waveguide 5 is positioned obliquely relative to the first parallel light beam, and both ends of the non-pupil-expansion optical waveguide 5 are fixed to the inner surface of the housing 8. That is, the non-pupil-expansion optical waveguide 5 is positioned obliquely relative to the collimating element. The optical efficiency of the non-pupil-expansion optical waveguide 5 is maximized when it is placed obliquely. Furthermore, when the non-pupil-expansion optical waveguide 5 is placed obliquely, it cooperates with the first transparent component 18 to effectively reduce scattered light emitted from the out-coupling region towards the object side. This prevents the situation that, during operation of the device, the light emitted from the out-coupling region towards the target could disturb and cause the target to be lost. The value of this oblique angle should guarantee that no stray light is scattered outward when observing on the object side within the aiming area while ensuring maximum energy transmission efficiency.

Furthermore, the optical waveguide sight further includes a quick-release bracket 20 (as shown in FIG. 5), which is configured for assembling the optical waveguide sight with other instruments. The optical waveguide sight further includes a quick-release locking block 21 (as shown in FIG. 6), which is configured for locking the optical waveguide sight to other instruments.

In the optical waveguide sight provided according to the present application, after the battery 14 is mounted into the sight and the battery cover 15 is secured, the power button on the button module 13 is pressed and held to activate the light source 9. After the light source 9 is powered, the light emitted by the light source 9 passes through the collimating element 4 for aberration correction, and enters the in-coupling region of the non-pupil-expansion optical waveguide 5 as collimated light. The collimated light undergoes total internal reflection via the diffraction grating inside the non-pupil-expansion optical waveguide 5 and alters its propagation direction, enabling it to propagate within the non-pupil-expansion optical waveguide 5. Upon reaching the out-coupling region of the non-pupil-expansion optical waveguide 5, the light is reflected again and directed towards the human eye 6. Meanwhile, a long press of the "+" button allows for switching different patterns of the light source 9 for user selection. A short press of the "+" and "-" buttons allows for adjusting the brightness of the light source 9. A short press of the "NV" button switches the light source 9 between the daytime mode and the night mode, while a long press of the "NV" button serves to power the device on or off.

The overall structure of the optical waveguide sight is described above. Next, the optical characteristics of the optical waveguide sight will be described.

The light source 9 is not limited herein, and it may be either a single-light source or multi-light sources. Specifically, the light source 9 may be a laser light source but is not limited to this, or it may also be a Light Emitting Diode (LED) light source, a display screen light source, a light source with a reticle pattern (as shown in FIG. 7), or a display screen light source with a digital image. When the light source 9 is a micro-display, it may carry long-wave infrared thermal imaging information, mid-wave infrared information, short-wave infrared information, near-infrared night vision imaging information, or other various electronic imaging information. When the light source 9 adopts a multi-light source, there is no restriction on the multi-light source. For example, the light sources may include a first light source 1 and a second light source 2. In this case, a light-combining element 3 is positioned in the optical path between the light source 9 and the collimating element 4. The light beams emitted from first light source 1 and the second light source 2 are combined by the light-combining element 3 before being transmitted to the collimating element 4. The first light source 1 and second light source 2 may be of the same type or different types of light source. The light source 9 includes at least the types of point light source and image source. The light-combining element 3 may be a semi-transparent and semi-reflective mirror. The first light source 1 and the second light source 2 are respectively positioned on opposite sides of the semi-transparent and semi-reflective mirror, which is arranged at an angle of 45 degrees relative to a centerline of the light beam emitted from the first light source 1 and also at an angle of 45 degrees relative to a centerline of the light beam emitted from the second light source 2.

The collimating element 4 is not restricted herein, as long as it may transform the light beam emitted from the light source 9 into the parallel light beam. For instance, the collimating element 4 may be a single lens, a combination of lenses, or a curved reflective mirror. Taking the light source 9 as a multi-light source (including a first light source 1 and a second light source 2) as an example, the sight provided by the embodiments of the present application is described below. FIG. 9 is an optical schematic view of a sight provided according to a first embodiment of the present application. As shown in FIG. 9, the sight includes a light-combining element 3, a collimating element 4, and a non-pupil-expansion optical waveguide 5, which are sequentially arranged along a propagation direction of the light beam emitted from the light source 9. The light source 9 includes a first light source 1 and a second light source 2. The first light source 1 is an image source.

The light-combining element 3 is configured to combine the light beams from the first light source 1 and the second light source 2.

The collimating element 4 is configured to collimate the light beams that have passed through the combining element 3.

An in-coupling region of the non-pupil-expansion optical waveguide 5 is configured to receive a first parallel light beam collimated by the collimating element 4 and alter the propagation direction of the first parallel light beam, enabling the light beam to undergo total internal reflection within the non-pupil-expansion optical waveguide 5 after passing through the in-coupling region.

An out-coupling region of the non-pupil-expansion optical waveguide 5 is configured to receive the light beam that has undergone total internal reflection transmission, and alter its propagation direction to form a second parallel light beam, which is then emitted into the human eye 6. The out-coupling region is a semi-transparent medium.

In the schematic view of the sight provided in FIG. 9, when the first light source 1 is an image source, such as a micro-display, it is configured to display images formed within different channels or other required information. When the second light source 2 is a point light source, it is configured to create a red dot target at infinity. When the light-combining element 3 is a semi-transparent and semi-reflective mirror, it is positioned at an angle of 45 degrees to the principal optical axes of the light beams emitted from both the micro-display and the point light source, and is configured to deflect the light beam emitted from the micro-display and combine it with the light beam emitted from the point light source. The collimating element 4 is configured to receive the light beams emitted from both the point light source and the micro-display, correct internal aberrations, and emit parallel light into the non-pupil-expansion optical waveguide 5. The non-pupil-expansion optical waveguide 5 is positioned perpendicular to the centerline of the collimated light form the collimating element 4. The in-coupling region of the non-pupil-expansion optical waveguide 5 receives the collimated light beam, and a holographic grating within this region redirects the incident collimated light, causing it to undergo total internal reflection within the non-pupil-expansion optical waveguide. Upon reaching the out-coupling region, the light is again redirected by the holographic grating within this region, propagating towards the human eye 6. Since the out-coupling region is a translucent medium, light from the external environment may propagate directly through it. The human eye 6 receives the light from the combination of the red dot light source, the micro-display, and the external environment.

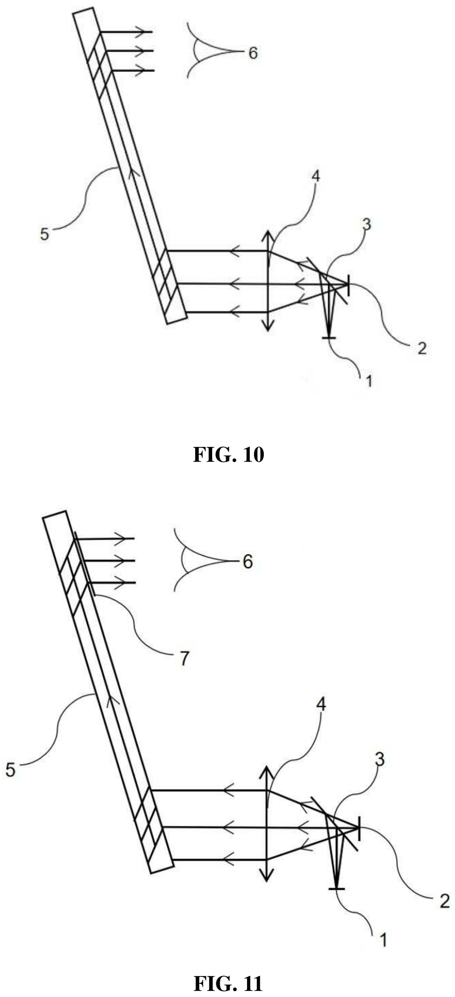

In FIG. 9, the non-pupil-expansion optical waveguide 5 is positioned perpendicular to the first parallel light beam. FIG. 10 is an optical schematic view of a sight provided according to a second embodiment of the present application. Comparing the schematic views of the sight shown in FIG. 9 and FIG. 10, it can be observed that the difference between the two lies in that the non-pupil-expansion optical waveguide 5 is inclined relative to the first parallel light beam in FIG. 10. Based on the diffraction grating equation, when the non-pupil-expansion optical waveguide 5 is inclined, the energy of the diffracted light within the diffraction angle β becomes more concentrated, thereby enhancing light energy utilization efficiency.

It is noteworthy that when using this sight, the information observed by the human eye 6 varies depending on the light source 9. When the light source 9 is a single-light source, the sight functions as a single-source on-pupil-expansion sighting system. Taking a red dot light source as an example, after a light beam is emitted from the red dot light source, it is collimated by the collimating element to form a first parallel light beam, which is then transmitted to the non-pupil-expansion optical waveguide 5. The first parallel light beam is redirected by the non-pupil-expansion optical waveguide 5 for total internal reflection therein, and then forms a second parallel light beam that is emitted to the human eye 6. At this point, the human eye 6 receives the red dot information.

To enable the user to observe more information through the sight, the out-coupling region is positioned in the optical path of the white light. The propagation direction of the second parallel light beam is consistent with that of the white light after it enters the sight. The white light, after being diffracted by the out-coupling region, is emitted to the human eye 6 together with the second parallel light beam formed based on the light source 9.

Specifically, on the basis that the light source 9 is a single-light source, the out-coupling region is also positioned within the optical path of the white light. Both the white light and the light beams from the single-light source undergo diffraction within the out-coupling region before being emitted to the human eye 6. That is, this sight is a dual-light non-pupil-expansion system composed of white light and a single-light source. When the single-light source is a red dot light source, the human eye 6 may observe the red dot information while also observe the real-world scene through the direct channel of the white light.

When the light source 9 is a multi-light source, this non-pupil-expansion system is also referred to as a multi-light non-pupil-expansion system. If the light source includes a first light source 1 and a second light source 2, a dual-light non-pupil-expansion system composed of the first light source 1 and the second light source 2 is formed. Furthermore, on the basis that the light source 9 consists of multiple light sources, the out-coupling region is positioned within the optical path of the white light, forming a multi-light non-pupil-expansion system composed of white light and multiple light sources. For instance, the white light and the light beams from the first light source 1 and the second light source 2 undergo diffraction within the out-coupling region before being emitted to the human eye 6, forming a three-light combined non-pupil-expansion system composed of the white light, the first light source 1, and the second light source 2.

In practice, the sight includes a hologram 7, which is located in the transmission path of the second parallel light beam. It is noteworthy that when the light source 9 includes a laser light source, the wavelength of the light beam from the laser light source is the same as that of the reference light used to prepare the hologram 7, ensuring that the grating information on the hologram 7 can be seen.

To enable the user to observe more information through the sight, the out-coupling region and the hologram 7 are positioned within the optical path of the white light. Moreover, the propagation direction of the second parallel light beam is consistent with that of the white light after it enters the sight. The white light, after being diffracted by the out-coupling region, propagates together with the second parallel light beam formed based on the light source 9 to the hologram 7, and is ultimately emitted to the human eye 6. FIG. 11 is an optical schematic view of a sight provided according to a third embodiment of the present application. Comparing with FIG. 10, it can be seen that a hologram 7 is added to the out-coupling region in FIG. 11. In a case that the hologram 7 is used in conjunction with the non-pupil-expansion optical waveguide 5, various preset target patterns can be generated in the hologram 7 when laser light illuminates the hologram 7. A green or red film within the hologram 7 enables the target to be displayed in distinct colors, thereby enhancing the user experience.

In the schematic view of the sight shown in FIG. 11, the first light source 1 is an image source, such as a micro-display, and is configured to display images formed within different channels or other required information. The second light source 2 is a laser light source and is configured to illuminate the hologram 7, forming targets at infinity. When the light-combining element 3 is a semi-transparent and semi-reflective mirror, it is positioned at an angle of 45 degrees to the optical axes of the main light beams emitted from both the laser light source and the micro-display, and is configured to deflect the light beam emitted from the micro-display, enabling it to be combined with the light beam emitted from the laser light source. The collimating element 4 is configured to receive the light beams emitted from both the laser light source and the micro-display, correct internal aberrations, and emit the parallel light beams into the non-pupil-expansion optical waveguide 5. The in-coupling region of the non-pupil-expansion optical waveguide 5 is configured to receive the collimated light, and a holographic grating within this region is configured to redirect the incident collimated light, causing it to undergo total internal reflection within the non-pupil-expansion optical waveguide. Upon reaching the out-coupling region, the light is again redirected by the holographic grating within this region, enabling it to propagate to the human eye 6. Since the out-coupling region is a translucent medium, light from the external environment may propagate directly through the out-coupling region. The laser beam from the laser light source illuminates the hologram 7 after passing through the out-coupling region, forming a preset target at infinity. The red or green film within the hologram 7 enables the target to be displayed in distinct colors, allowing the user to customize the shape and color of the target. The human eye 6 is used to receive the combined light from the target, the micro-display and the external environment.

It is noteworthy that when using this sight including the hologram 7, the information observed by the human eye 6 varies depending on the light source 9. When a single-light source is used as the light source 9, the sight functions as a single-light non-pupil-expansion system. Taking a laser light source as an example of the light source 9, the light beams are emitted by the laser light source and are collimated by the collimating element 4 into parallel light, which then enters the out-coupling region. After the incident light beams are received by the out-coupling region, it is incident onto the hologram 7 as parallel light, allowing the human eye 6 to acquire the reticle information recorded on the hologram 7. To enable the user to observe more information through the sight, on the basis that the light source 9 is a single-light source, the out-coupling region is positioned in the optical path of the white light. That is, this sight is a dual-light non-pupil-expansion system composed of white light and a single-light source. When the single-light source is a laser light source, the human eye 6 may observe the reticle information while also observe the real-world scene through the direct channel of the white light.

When the light source 9 is a multi-light source, this sight is also referred to as a multi-light non-pupil-expansion system. If the light source 9 includes a first light source 1 and a second light source 2, a dual-light non-pupil-expansion system composed of the first light source 1 and the second light source 2 is formed. Furthermore, on the basis that the light source 9 consists of multiple light sources, the out-coupling region is positioned within the optical path of the white light, forming a multi-light non-pupil-expansion system composed of white light and multiple light sources. For instance, a three-light combined non-pupil-expansion system composed of white light, the first light source 1 and the second light source 2 is formed. When the first light source 1 is a laser light source and the second light source 2 is an image source, this sight enables the user to observe both the holographic reticle information and the image source information while providing no obstruction to the direct channel of the white light. As a result, the user may also observe the real-world scene through the direct channel of the white light. Thus, the sight ensures the amount of light entering the human eye 6, allowing the user to accurately observe images from multiple channels.

In the sight provided according to the embodiment of the present application, by utilizing the non-pupil-expansion optical waveguide 5 to alter the propagation path of the light beam, the optical waveguide sight achieves optical path effects of the reflective sight while avoiding the issues of large size and weight, or poor target display performance commonly associated with the reflective sight. Thus, the optical waveguide sight has the advantages such as small footprint, light weight and excellent display effect. Furthermore, the area of the coupled-in image entering the non-pupil-expansion optical waveguide 5 is identical to that of the coupled-out image exiting the non-pupil-expansion optical waveguide 5, so that the optical waveguide is a non-pupil-expansion optical waveguide 5, eliminating the need for the coupled-in image to be copied within the optical waveguide. This area consistency between the coupled-in image and the coupled-out image reduces the optical efficiency loss caused by image copying. Furthermore, the size of the in-coupling region and the size of the out-coupling region are the same and both are larger than the preset size, so that the optical waveguide may achieve a large exit pupil effect, yield a high-quality coupled-out image, minimize optical efficiency loss and provide good observation experience. Additionally, since the light beam undergoes total internal reflection within the non-pupil-expansion optical waveguide 5, transmission of the light beam is avoided and further light loss is minimized. This increases the amount of light entering the human eye 6, significantly enhancing the user experience. The non-pupil-expansion system combines the compact size and light weight of a red dot sight with the clear target without chromatic aberration and high stability of a holographic sight, significantly enhancing the user experience.

To achieve a compact and miniaturized design of the sight, an optical waveguide sight is further provided in this embodiment, including a housing 8, a light source 9, a collimating element 4, and an optical waveguide. The housing 8 includes a lower first housing and an upper second housing. The light source 9 and the collimating element 4 are housed inside the first housing. The in-coupling region of the optical waveguide is situated inside the first housing, and the out-coupling region of the optical waveguide is positioned inside the second housing. That is, the optical waveguide extends through the first housing and the second housing in the vertical direction. The light source 9, the collimating element 4, and the in-coupling region of the optical waveguide are sequentially arranged along the optical path.

Based on the above structural design, the light beam emitted from the light source 9 is collimated by the collimating element 4 to form a first parallel light beam, which propagates along a first optical axis to the in-coupling region of the optical waveguide, and after it is redirected by the optical waveguide, it is then propagated to the out-coupling region, forming a second parallel light beam that exits along the second optical axis and enters the human eye 6. At the same time, the external white light may be directly incident to the out-coupling region of the optical waveguide along the second optical axis, and emitted to the human eye 6 together with the second parallel light beam. That is to say, the first optical axis is formed in the first housing, and the second optical axis is formed in the second housing, with the first optical axis and the second optical axis being parallel to each other. The optical waveguide may be positioned perpendicular to the first optical axis, or at an inclined angle relative to the first optical axis. The inclined configuration of the optical waveguide is preferred for a more compact design. Furthermore, the first housing may be dimensioned larger than the second housing in the optical axis direction, so that most of the components may be arranged inside the first housing, and the second housing is primarily configured to accommodate the out-coupling region of the optical waveguide.

The optical waveguide sight further includes a battery compartment 10, which is housed within the first housing and positioned on one side of the optical waveguide. The battery compartment 10 may be positioned on either side of the optical waveguide, and preferably located on the side opposite to the in-coupling channel of the optical waveguide, so that the optical elements of the in-coupling channel and the battery compartment 10 are located on opposite sides of the optical waveguide, respectively. Moreover, it is preferable that the axial direction of the battery compartment 10 is perpendicular to the optical path propagation direction of the in-coupling channel. A battery cover 15 is situated on a side of the first housing, and a battery 14 is housed within the battery compartment 10. One end of the battery 14 located within the battery compartment 10 is connected to the power supply board to supply electrical power to the power supply board.

The optical waveguide sight further includes a button module 13 and a vibration sensor. The button module 13 may be positioned on either side of the first housing, including buttons exposed outside the first housing and a button board housed inside the first housing. The vibration sensor is arranged inside the first housing, and may be located on the button board or on another circuit board. The operating principle of the vibration sensor is as described above and will not be described herein.

The optical waveguide sight further includes a light source adjustment mechanism 12, which is partially positioned on the outer side and partially inside the first housing. The light source adjustment mechanism 12 includes a first adjustment mechanism 1201 and/or a second adjustment mechanism 1202, which may be configured to adjust the position of the light source 9 in different directions, respectively. The specific structure and operating principle may be referred to the above description and will not be described herein. In a preferred embodiment, the light source adjustment mechanism 12 includes a first adjustment mechanism 1201 and a second adjustment mechanism 1202, which are configured to adjust the position of the light source 9 in the left-right direction and in the vertical direction, respectively. A first adjustment knob 12.1 and a second adjustment knob 12.3 are respectively positioned on opposite sides of the first housing for convenience of user operation.

The optical waveguide sight further includes a first transparent component 18 and/or a second transparent component 19. The first transparent component 18 is located on a side of the optical waveguide away from the human eye 6 and is embedded within the housing 8. The second transparent component 19 is positioned on a side of the optical waveguide close to the human eye 6. For example, both the first transparent component 18 and the second transparent component 19 may be made of glass, specifically with the first transparent component 18 serving as a front protective glass and the second transparent component 19 serving as a rear protective glass. The first transparent component 18 is situated on the object side and is configured to protect the optical waveguide and reduce scattered light reflected to the object side from the optical waveguide. The second transparent component 19 is positioned close to the human eye 6 and is configured to transmit the image output by the optical waveguide and protect the optical waveguide. The first transparent component 18 may be inclined or parallel relative to the optical waveguide. Preferably, the first transparent component 18 is inclined relative to the optical waveguide, and is coated with an anti-reflective (AR) film. The second transparent component 19 may be inclined or parallel relative to the optical waveguide. Preferably, the second transparent component 19 is parallel to the optical waveguide, and is coated with an AR film. This arrangement not only enhances the light transmittance of the device, but also makes the device sleek and beautiful. Additionally, a protective window is positioned on the side of the second transparent component 19 close to the human eye 6 to shield against rainwater, enabling the user to observe without interference from rainwater even on rainy days.

The optical waveguide sight further includes a photosensitive component 16, which is housed inside the housing 8. Furthermore, a light-transmitting component 17 that aligns with a light-receiving part of the photosensitive component 16 is arranged on the housing 8. Ambient light passes through the light-transmitting component 17 and is received by the photosensitive component 16, which first detects changes in the ambient light via its own photosensitive element. When the photosensitive component 16 detects that the external environment becomes brighter, the power supply board increases the power output based on the signal transmitted by the photosensitive component 16, thereby enhancing the brightness of the light source 9 to ensure clear visibility of the reticle. Conversely, when the photosensitive component 16 detects that the external environment becomes darker, the power supply board reduces the power output based on the signal transmitted by the photosensitive component 16, reducing the brightness of the light source 9 to prevent the reticle from becoming excessively bright and glaring. Ultimately, this optical waveguide sight achieves the effect of automatically adapting the reticle brightness to the ambient light.

The optical waveguide sight further includes a quick-release bracket 20 and a quick-release locking block 21. Both the quick-release bracket 20 and the quick-release locking block 21 are situated at a bottom of the first housing, and configured to mount the optical waveguide sight to a gun or a similar instrument and lock it in place.

The optical waveguide sight provided in this embodiment has all its components arranged in the first housing and the second housing. Specific optical path and other structural details may be referenced to the preceding description. The optical waveguide may be the non-pupil-expansion optical waveguide described above or any other conventional optical waveguide. The optical waveguide sight has a compact overall structure, achieving miniaturization of the entire optical waveguide sight.

The optical waveguide and the optical waveguide sight provided according to present application are described in detail above. The embodiments in the specification are described in a progressive manner. Each of the embodiments mainly focuses on differences from other embodiments, and references can be made to each other for the same or similar portions among the embodiments. It should be noted that for those skilled in the art, without departing from the principles of the present application, improvements and modifications may be made to the present application, and these improvements and modifications also fall within the protection scope of the present application.

It should also be noted that in the present application, relational terms such as "first" and "second" are only used to distinguish one entity or operation from another entity or operation. It is not necessarily required or implied that any such actual relationship or order exists among the entities or the operations. Moreover, terms such as "include", "comprise" or any variants thereof are intended to be non-exclusive. Therefore, a process, method, article or device including a series of elements includes not only those elements but also other elements that are not explicitly listed, or further includes elements inherent to the process, method, article or device. In addition, unless expressively limited otherwise, the statement "including a..." does not exclude existence of other identical elements in the process, method, article or device including the element.

## Claims

1. An optical waveguide sight, comprising a light source (9), a collimating element (4), and a non-pupil-expansion optical waveguide (5), wherein
the light source (9) and the collimating element (4) are sequentially arranged along an in-coupling channel of the non-pupil-expansion optical waveguide (5); and
the collimating element (4) is configured to collimate a light beam emitted from the light source (9) to form a first parallel light beam that is then transmitted to an in-coupling region of the non-pupil-expansion optical waveguide (5), and the non-pupil-expansion optical waveguide (5) is configured to redirect and transmit the first parallel light beam to an out-coupling region of the non-pupil-expansion optical waveguide (5) to form a second parallel light beam that is then emitted to a human eye (6).

2. The optical waveguide sight according to claim 1, wherein both the in-coupling region and the out-coupling region of the non-pupil-expansion optical waveguide (5) have a size greater than a preset size; and
the size of the in-coupling region and the size of the out-coupling region are the same, or a difference between the size of the in-coupling region and the size of the out-coupling region is smaller than a preset threshold, so that an area of an image coupled into the non-pupil-expansion optical waveguide (5) is identical to that of an image coupled out the non-pupil-expansion optical waveguide (5).

3. The optical waveguide sight according to claim 1, further comprising a housing (8), wherein the light source (9), the collimating element (4), and the non-pupil-expansion optical waveguide (5) are all arranged inside the housing (8).

4. The optical waveguide sight according to claim 3, further comprising a light source adjustment mechanism (12) arranged in the housing (8), wherein
the light source (9) is disposed on the light source adjustment mechanism (12), and wherein
the light source adjustment mechanism (12) comprises a first adjustment mechanism (1201) and/or a second adjustment mechanism (1202), and the first adjustment mechanism (1201) and the second adjustment mechanism (1202) are configured to adjust positions of the light source (9) in different directions, respectively.

5. The optical waveguide sight according to claim 4, wherein the first adjustment mechanism (1201) comprises a first adjustment knob (12.1) and a first transmission component (12.2), the first adjustment knob (12.1) comprises a first operating part (1203) located outside the housing (8) and a first extending part (1204) extending into the housing (8), the first extending part (1204) is connected to the first transmission component (12.2), which is connected to the light source (9), and the first adjustment knob (12.1) is rotatable to move the light source (9) in a left-right direction via the first transmission component (12.2); and/or
the second adjustment mechanism (1202) comprises a second adjustment knob (12.3) and a second transmission component (12.4), the second adjustment knob (12.3) comprises a second operating part (1205) located outside the housing (8) and a second extending part (1206) extending into the housing (8), the second extending part (1206) is connected to the second transmission component (12.4), which is connected to the light source (9), and the second adjustment knob (12.3) is rotatable to move the light source (9) in a vertical direction via the second transmission component (12.4).

6. The optical waveguide sight according to claim 5, wherein the second adjustment mechanism (1202) further comprises a third transmission component (12.5), which is interlinked with the second extending part (1206) and is in wedge-shaped abutment with the second transmission component (12.4) to convert a left-right movement of the second extending part (1206) into a vertical movement of the second transmission component (12.4).

7. The optical waveguide sight according to claim 1, further comprising a vibration sensor, wherein the vibration sensor is in signal connection with a main control module; or
the out-coupling region is arranged on an optical path of a white light, and a propagation direction of the second parallel light beam is consistent with that of the white light after entering the optical waveguide sight, so that the white light is diffracted from the out-coupling region and is emitted along with the second parallel light beam formed based on the light source (9) to the human eye (6).

8. The optical waveguide sight according to claim 3, further comprising a battery compartment (10), wherein the battery compartment (10) is arranged in the housing (8) and is located at one side of the non-pupil-expansion optical waveguide (5).

9. The optical waveguide sight according to claim 3, further comprising a photosensitive component (16), wherein the photosensitive component (16) is arranged inside the housing (8), and a light-transmitting component (17) that aligns with a light-receiving part of the photosensitive component (16) is arranged on the housing (8).

10. The optical waveguide sight according to claim 3, further comprising a first transparent component (18), wherein the first transparent component (18) is located at a side of the non-pupil-expansion optical waveguide (5) away from the human eye (6) and is embedded in the housing (8); and/or
further comprising a second transparent component (19), wherein the second transparent component (19) is located at a side of the non-pupil-expansion optical waveguide (5) close to the human eye (6) and is embedded in the housing (8).

11. The optical waveguide sight according to claim 3, wherein the non-pupil-expansion optical waveguide (5) is arranged obliquely relative to the first parallel light beam, and both ends of the non-pupil-expansion optical waveguide (5) are fixed to an inner surface of the housing (8); or
the non-pupil-expansion optical waveguide (5) is arranged perpendicular to the first parallel light beam, and both ends of the non-pupil-expansion optical waveguide (5) are fixed to the inner surface of the housing (8).

12. The optical waveguide sight according to any one of claims 1 to 11, wherein the light source (9) is a single-light source; or
the light source (9) comprises a first light source (1) and a second light source (2), a light-combining element (3) is arranged on an optical path between the light source (9) and the collimating element (4), so that light beams emitted from the first light source (1) and the second light source (2) are combined by the light-combining element (3) and then transmitted to the collimating element (4), and the first light source (1) and the second light source (2) are configured as the same type or different types of the light source (9), with the type of the light source comprising a point light source type, an image source type, and a laser light source type.

13. The optical waveguide sight according to claim 12, wherein a hologram (7) is arranged on a light-output side of the out-coupling region and is located on a transmission path of the second parallel light beam; and/or,
in a case that the light source (9) comprises a laser light source, the laser light source has a wavelength identical to that of a reference light used in preparing the hologram (7); and/or,
the out-coupling region and the hologram (7) are also arranged in an optical path of a white light, and a propagation direction of the second parallel light beam is consistent with that of the white light after entering the optical waveguide sight, so that the white light is diffracted from the out-coupling region, transmitted together with the second parallel light beam formed based on the light source (9) to the hologram (7), and finally emitted to the human eye (6).

14. An optical waveguide, comprising a waveguide sheet (50), wherein the waveguide sheet (50) has an in-coupling region and an out-coupling region provided at both ends thereof, respectively, wherein both the in-coupling region and the out-coupling region have a size greater than a preset size;
the size of the in-coupling region and the size of the out-coupling region are the same, or a difference between the size of the in-coupling region and the size of the out-coupling region is smaller than a preset threshold;
the in-coupling region is configured to receive a first parallel light beam and redirect it for total internal reflection within the waveguide sheet (50), and the out-coupling region is configured to receive the light beam after total internal reflection and redirect it to form a second parallel light beam; and
an area of an image coupled into the waveguide sheet (50) is identical to that of an image coupled out the waveguide sheet (50).

15. The optical waveguide according to claim 14, wherein a sum of the areas of the in-coupling region and the out-coupling region is greater than 70% of an area of the waveguide sheet (50); or
a hologram (7) is arranged on a light-output side of the out-coupling region, and is located on a transmission path of the second parallel light beam.
